# EUROPÄISCHE PATENTSCHRIFT

(11) **EP 1 097 624 B1**
(45) Veröffentlichungstag und Bekanntmachung des Hinweises auf die Patenterteilung: **08.03.2006**
(21) Anmeldenummer: 00124125.6
(22) Anmeldetag: 06.11.2000
(51) Int. Cl.: A01D 25/02, A01D 25/04

(54) **Zuckerrüben-Rodevorrichtung**
Lifting device for sugar beet
Dispositif d'arrachage de betteraves sucrières

(30) Priorität: 06.11.1999 DE 19953449
(43) Veröffentlichungstag der Anmeldung: 09.05.2001
(73) Patentinhaber: Gramse, Siegfried, 38228 Salzgitter (DE)
(72) Erfinder: Ing. Siegfried Gramse, 38228 Salzgitter (DE); Stefan Gramse, 38228 Salzgitter (DE)
(74) Vertreter: Lins, Edgar

(56) Entgegenhaltungen:
- EP-A- 0 950 345
- WO-A-96/24241
- DE-A- 3 229 987
- DE-U- 29 920 273
- FR-A- 2 106 670
- FR-A- 2 464 630

## Beschreibung

Die Erfindung betrifft eine Zuckerrüben-Rodevorrichtung gemäß dem Oberbegriff des Anspruchs 1.

Der bisher praktizierte Rodevorgang bei der Zuckerrüben-Ernte erfolgt mit sogen. Polderscharen, Zinken- oder Dornscharen oder aber mit zwei gegenüberliegenden Rodescheiben und basiert auf der Tatsache, dass die Zuckerrüben durch "Flankenpressung" zweier gegenüberliegender V-förmig angestellter Scharhälften ausgehoben werden, die in einem vorne offenen Winkel auf lichter Weite von etwa 200 mm erfasste Erde mit den zu rodenden Rübenkörpern während des Rodevorgangs sehr stark über eine tiefliegende Engstelle zusammenpressen. Der angestrebten Trennung und Abreinigung der Erde von den Zuckerrüben steht dies absolut entgegen. Der eine seitliche Abstand zwischen den beiden Scharhälften beträgt annähernd 20 mm und macht eine Selbstlenkung der Schare erforderlich, weil schon bei geringen Seitenabweichungen eine starke Scherwirkung an den Zuckerrüben eintritt und letztlich Verluste verursacht. Das weiteren ist ein hoher Widerstand des verdichteten Bodens zu überwinden. Zu berücksichtigen ist außerdem, dass durch den Wuchs der Rübenkörper auf einer Dicke von etwa 50-100 mm in der Oberkrume des Bodens im Verlauf der Wachstumsperiode der Boden in der Rübenreihe und beiderseits der Rübenreihe stark verdichtet sowie unter Spannung gebracht wird.

Derartige Zuckerrüben-Rodevorrichtungen sind mehrfach bekannt geworden, beispielsweise durch DE-OS 20 41 595, DE 29 37 544 A1, DE 32 33 398 A1, DE 195 04 252 C1.

Eine Zuckerrüben-Rodevorrichtung der eingangs erwähnten Art ist durch DE 32 29 987 A1 bekannt. Sie beruht auf dem gleichen Prinzip wie die anderen bekannten Rodevorrichtungen und weist somit die gleichen Nachteile auf, insbesondere die Verdichtung des Bodens vor dem Ausheben der Rübe.

Eine Zuckerrüben-Rodung ohne beidseitige Pressung ist bisher nur mit einseitig arbeitenden Hohlschutzscheiben möglich, wie es beispielsweise in der Praxis durch Rübenroder in Frankreich bekannt geworden ist. Es besteht dabei jedoch der große Nachteil, dass die "herausgepflügten" Zuckerrüben vom Boden per Siebstern aufgenommen und somit samt Erdanteil, Blatt und Unkraut der maschineneigenen Reinigungsvorrichtung zugeführt werden müssen. Das gelingt jedoch nur dann, wenn auch die tiefste Stelle des Bodenniveaus durch flach am Boden anliegende Siebsterne erreicht wird. Der Energiebedarf und der Erdabreinigungsaufwand ist bei Zuckerrüben-Rodemaschinen mit solchem Rodesystem sehr hoch.

Bei gattungsgemäßen Zuckerrüben-Rodevorrichtungen wird durch die angetriebenen Förderrotoren ein verbesserter Rübenfluss mit verbesserter Erdabscheidung im Anschluss an den eigentlichen Rodevorgang erzielt. Nachteilig ist dabei noch, dass sich aufgrund der zwei angetriebenen Fingerräder pro Rübenreihe ein konstruktionsaufwändiger, schwerer und relativ teuerer Aufbau ergibt. Bei mehrreihig rodenden Zuckerrüben-Erntemaschinen mit in Frontbereich angeordneten Rodevorrichtungen wird oftmals auch die Einsicht in die Rübenreihen sehr beeinträchtigt, sodass sich Einsteuerungsprobleme auf und in die Reihen ergeben bzw. die Überwachung der Rübenaufnahme und - bei "Köpfrodern" - ggf. auch der Köpfung erschwert wird. Außerdem kann es durch loses Blatt und bei verunkrauteten Rübenfeldern zu Verstopfungen auf den Rodeelementen führen - dies insbesondere bei Rübenrodern mit mangelnder Einsicht auf das Rodeaggregat.

Der Erfindung liegt die Aufgabe zugrunde, eine verbesserte Zuckerrüben-Rodevorrichtung zu schaffen, die insbesondere keine oder zumindest eine verringerte Bodenverdichtung vor dem Roden der Zuckerrübe bewirkt.

Zur Lösung dieser Aufgabe ist eine Zuckerrüben-Rodevorrichtung der eingangs erwähnten Art durch die Merkmale des Kennzeichens der Anspruchs 1 gekennzeichnet.

Gegenstand der Erfindung ist ein neues Zuckerrüben-Rodesystem, welches sich im Wesentlichen aus drei miteinander kombinierten Elementen/Werkzeugen zusammensetzt, die auf engem Raum und auf mehreren Ebenen direkt zusammenwirkend arbeiten und die einzelnen Zuckerrüben mit geringem Energieaufwand schonend und weitgehenst ohne Erdanpressung roden sowie mit geringstmöglichem Erdanhang auf eine mit Abstand zum Bodenniveau vorgesehene maschineneigene Förderstrecke/Reinigungsstrecke hochfördern. Während die vorzugsweise bodenangetriebene Hohlschutzscheibe einseitig in einer üblichen Rodetiefe - von ca. 30 bis 50 mm - Rüben auspflügend arbeitet, lockert das gegenüberliegende Scharelement neben der Rübenreihe den Boden auf, und das vorzugsweise über diesem Scharelement angetrieben rotierende Fingerrad unterstützt die Hochförderung auf der maschineneigenen Förderstrecke/Reinigungsstrecke, beispielsweise auf Leitstäben und unterstützt die Erdabscheidung. In Folge des Versatzes von Rodescheibe und dem rübenfördernden Fingerrad ergibt sich eine Rodevorrichtung mit guter Einsicht in den Rodungsbereich. Da pro Rübenreihe nur ein einziger Rotor angetrieben werden muss, liegt ein vereinfachter, raum- und gewichtssparender sowie letztendlich kostengünstiger Aufbau vor. Durch die beiden nacheinander auf die Zuckerrübe einwirkenden Rotoren, nämlich zuerst die vorzugsweise als Hohlschutzscheibe ausgebildete Rodescheibe (an der einen Rübenseite) und dann das Fingerrad (an der anderen Rübenseite), wird der Rübenkörper wechselweise quer zur Maschinen-Fahrtrichtung bewegt. Die erfindungsgemäße Zuckerrüben-Rodevorrichtung weist folgende Vorteile auf:
- sie ist auch für den Einsatz in mehrreihig rodenden Zuckerrüben-Erntemaschinen problemlos geeignet,
- sie arbeitet auch bei stärkerem Unkrautbesatz mit verringerter Verstopfungsgefahr,
- ermöglicht einen preisgünstigeren Fingerrad-Antrieb pro Rübenreihe und
- ermöglicht bei mehrreihigen Rodern eine verbesserte Einsicht zu den Rübenreihen.

Gemäß bevorzugter Ausgestaltung ist das der Hohlschutzscheibe gegenüberliegende Scharelement von einem Zinkenschar (teilweise als "Dornschar" bezeichnet) gebildet. Ein solches Zinkenschar lockert mit seiner vorderen spitz neben der Rübenreihe vor dem eigentlichen Rodevorgang der von einer Hohlschutzscheibe gebildeten Rodescheibe einen tieferen Bodenhorizont auf, der unter der üblichen "Rodeebene" liegt. Aufgrund dieser "Tiefenarbeit" des Zinkenschars wird das gesamte Bodengefügte an und in der Rübenreihe positiv verändert, insbesondere entspannt, und der Trennungsvorgang von Erde und Rübenkörper bereits eingeleitet sowie letztendlich enorm erleichtert. Das erfindungsgemäße Fingerrad arbeitet im direkten Eingriff - etwa 30-40 mm über der aufsteigenden Ebene des Zinkenschars - und greift in den Rodungsprozess ein, vermindert den Anteil des von der Rodescheibe aufgeworfenen Bodens unterhalb des Fingerrad-Arbeitsradius und bewirkt neben der Rübenanhebung auch die Erdabscheidung, wobei seine Finger (Sternzinken) den aufgeworfenen Bodenbereich durchkämmen, nur wenig Erde aufnehmen und mitfördern sowie auch Erde vom Rübenkörper entfernen (abstreifen und/oder abwerfen) sowie vibrationsbedingt sich selbst reinigen.

Das erfindungsgemäße Rodesystem ist raumsparend und gewichtsmäßig leicht aufgebaut und bewirkt in jeder Rübenreihe das Vorlockern, Auflockern und Durchkämmen des Bodens sowie das rodungsbedingte Zuckerrüben-Anheben aus der Wuchsposition, Rüben(vor)reinigen und Hochfördern der Zuckerrübe auf ein mit Abstand zur Bodenebene angeordnetes Förder- und Reinigungssystem und vollbringt dies alles ohne nennenswertes Zusammenpressen und Anpressen von Erde, ohne nachteilige Rüben-Quetschung und ohne bisher erforderlichen hohen Energieaufwand.

Eine erfindungsgemäße Zuckerrüben-Rodevorrichtung zeichnet sich gegenüber dem Vorbekannten durch vereinfachten und preisgünstigeren Aufbau sowie das kombinatorische Zusammenwirken von drei unabhängig arbeitenden und trotzdem aufeinander abgestimmt unmittelbar zusammenarbeitenden Aggregatteilen (nämlich Rodescheibe, platten- oder dornartige Scharhälfte und Fingerrad) aus.

Bei der Erfindung ist es besonders vorteilhaft, dass pro Rübenreihe trotz zwei eingesetzter Rotoren infolge der Verwendung einer bodenangetriebenen Hohlschutzscheibe als rübenauspflügender Rodescheibe nur ein Rotor-Antrieb, nämlich für den Fingerrad-Antrieb, benötigt wird.

Vorteilhaft ist auch, dass durch den räumlichen Versatz zwischen der Rodescheibe und dem auch ein Widerlager für die von der Rodescheibe seitwärts, dass heißt quer zur Maschinen-Fahrtrichtung, bewegte Zuckerrübe bildenden zinken- oder scharplattenartigen Rodeelement zugeordneten Fingerrad gleichzeitig ein vorteilhafter Raum für die Antriebseinheit des Fingerrades gebildet wird - wobei hier ein Hydraulikmotor (so genannte Hydromotor) in bevorzugter Weise zum Einsatz gelangen kann- und eine gute Einsicht in die zu rodende Rübenreihe ermöglicht wird.

Die erfindungsgemäßen Zuckerrüben-Rodevorrichtung, dabei insbesondere Ausführungen mit Hydraulikmotor zum Fingerrad-Antrieb, lassen sich besonders vorteilhaft bei Mehrreihen-Rodemaschinen für die Zuckerrüben-Ernte, beispielsweise/insbesondere bei 6-Reihen-Zuckerrübenrodern, als voneinander unabhängige Einheiten ausbilden. Dabei kann (und dies ist sowohl vorteilhaft als auch bevorzugt) dann jede Rodevorrichtung einzeln (gesondert) in der Höhe geführt sein - solches ergibt sich gegenüber dem bisherigen erheblich verbesserte "Bodenanpassung" und gewährleistet beste Voraussetzungen für eine optimale Rodungsqualität, und zwar auch auf unebenem Bodenprofil, wie nun stets in der richtigen Höhe gearbeitet wird.

Das neue, erfindungsgemäße Rodungssystem für Zuckerrüben erfordert außerdem in vorteilhafter und ökonomischer Weise eine geringere Schubkraft als die bisher vorbekannten und zum Stand der Technik benannten Ausführungen. Es ermöglicht eine bedeutende Energieeinsparung beim Zuckerrüben-Roden - dies bedeutet letztendlich eine erhebliche Kostenreduzierung für die Zuckerrüben-Ernte.

Die Erfindung ermöglicht somit, teilweise in bevorzugten Ausführungsformen folgende Besonderheiten:

Das rotierende Rodeelement auf der einen Rübenseite wird mit dem an sich starren Rodeelement plus Fingerrad auf der anderen Rübenseite (jeweils bezogen auf die Rübenreihe/Reihenmitte) kombiniert, wobei das Fingerrad vorzugsweise starre, jedoch in gewissem Maß ausweichbar gehaltene Mitnehmerfinger aufweist. Funktionsmäßig ist als Besonderheit hervorzuheben, dass die Zuckerrüben jeweils zusätzlich zum rodungsbedingten Aushebevorgang auch quer zur Reihenflucht/Mitte (dass heißt von links nach rechts - oder umgekehrt von rechts nach links) in (vor)gelockertem Boden bewegt werden. Die bevorzugte und vorteilhafte Rodescheiben-Ausbildung als Hohlschutzscheibe benötigt keinen Rotationsantrieb. Außerdem bewirkt diese Rodescheiben-Ausbildung als "Hohlschutzscheibe" eine pflugscharartige Aushebung von Erdreich plus Rübenkörper - insbesondere erleichtert dies einerseits den gesamten Rodevorgang und andererseits die Erdabscheidung vom Rübenkörper. Da das dem vorzugsweise zinkenscharartigen Rodeelement direkt zugeordnete, angetriebene Fingerrad vorzugsweise schneller rotiert bzw. rotieren kann als die vom Boden bewegte Hohlschutzscheibe, erfährt jeder Rübenkörper innerhalb der erfindungsgemäßen Rodevorrichtung einen positiven Drall, wodurch eine Steigerung der Erdabscheidung gewährleistet wird. von Vorteil ist auch, dass die Zuckerrübe am hinteren äußeren Scheibenrand eine Engstelle passiert, was ebenfalls zur erhöhten Reinigung innerhalb der erfindungsgemäßen Rodevorrichtung beiträgt und das auf der anderen Seite der Rübenreihe wirkende Fingerrad im Bedarfsfall ausweichen kann, ohne dass es zu einer Rüben-Beschädigung kommt.

Auf der Zeichnung sind Ausführungsbeispiele der Erfindung ,schematisch dargestellt und werden nachfolgend kurz erläutert. Es zeigen :

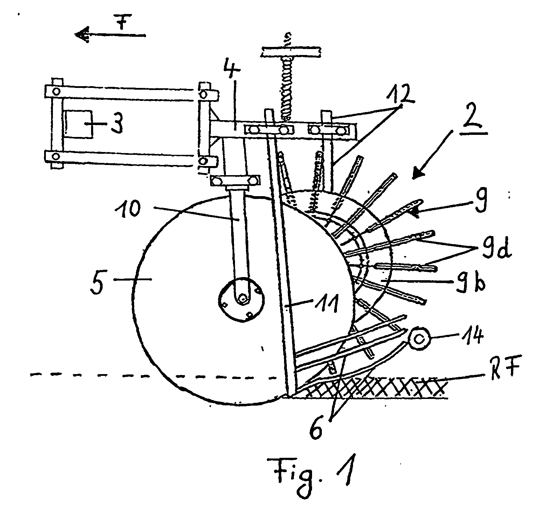

Fig. 1 eine Seitenansicht einer erfindungsgemäßen Zuckerrüben-Rodevorrichtung, bei der pro Rodereihe auf der einen (hierbei linken) Vorrichtungsseite als Rodeelement eine bodenangetriebene Hohlschutzscheibe und auf der anderen (hierbei rechten) Vorrichtungsseite ein zinkenartiges Rodeelement plus diesem zugeordnetes, die gerodete Zuckerrübe nach hinten hochförderndes Fingerrad angeordnet sind und die Hohlschutzscheibe (Rodescheibe) im rückwärtigen Peripheriebereich außenseitig von einem Leitrost überfaßt wird,

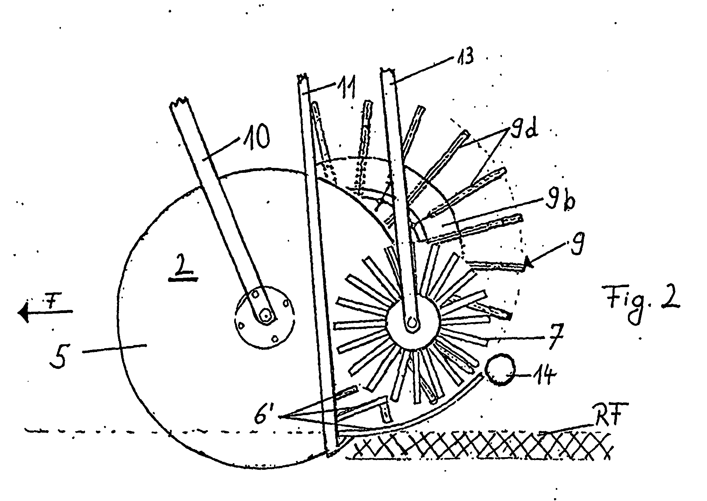

Fig. 2 einen Ausschnitt einer Seitenansicht einer gegenüber Fig. 1 abgeänderten Ausführungsform, bei welcher der Rodescheibe zusätzlich ein den hinteren Bereich außenseitig überdeckender Seitenstern zugeordnet ist und dementsprechend das Leitrost verkürzte Stäbe (Seitenstäbe) aufweist,

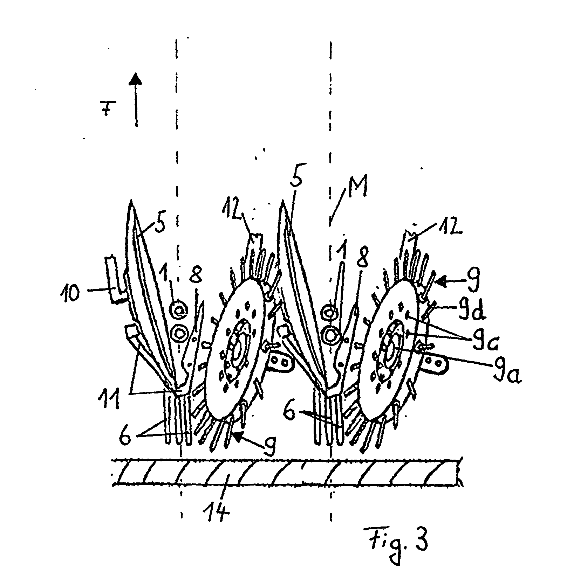

Fig. 3 eine Draufsicht auf zwei nebeneinander angeordnete erfindungsgemäße Zuckerrüben-Rodevorrichtungen (wobei nur die Rodeelemente und die denselben zugeordneten Leit- und/oder Förderelemente aufgezeigt werden) plus nachgeschaltete "Reinigungswalze" als rübenübernehmendes Organ der maschineneigenen Förder- und Reinigungsstrecke,

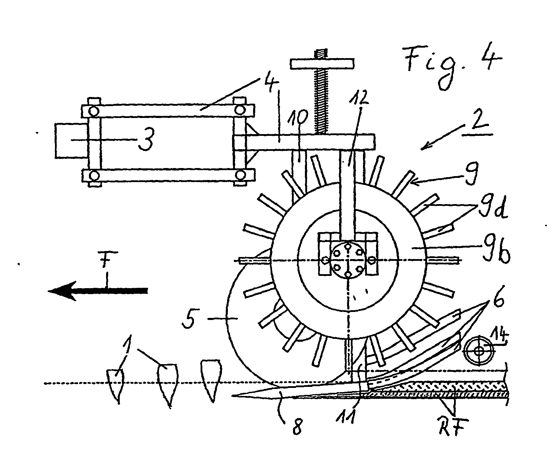

Fig. 4 eine Seitenansicht einer weiteren, gegenüber Fig. 1 im wesentlichen dahingehend abgeänderten Ausführungsform, daß die Rodeelemente seitenvertauscht angeordnet sind und dementsprechend die bodenangetriebene, rübenauspflügende Rodescheibe auf der rechten Vorrichtungdsseite und das fremdangetriebene, rübenhochfördernde Fingerrad auf der linken Vorrichtungsseite liegt, wobei jedoch auch die verschiedenen Lockerungsphasen im Boden aufgezeigt werden,

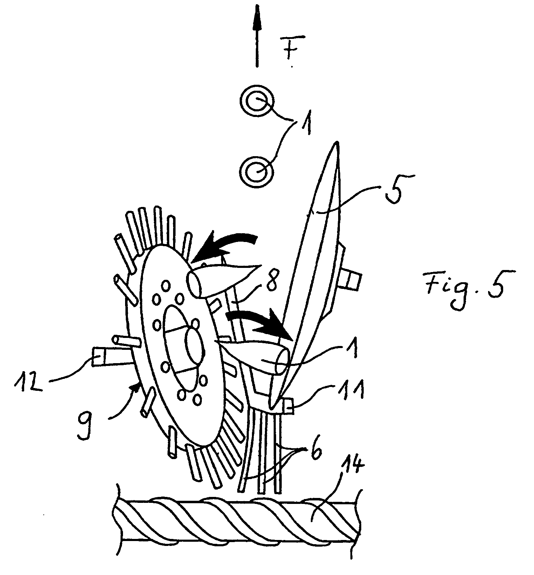

Fig. 5 eine Draufsicht auf dieselbe Zuckerrüben-Rodevorrichtung, wobei insbesondere die seitliche Bewegung der Zuckerrübe einerseits mittels der Rodescheibe und andererseits mittels des Fingerrades verdeutlicht wird, und

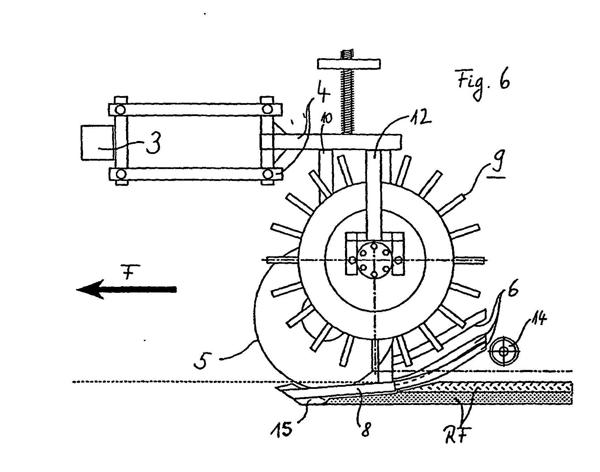

Fig. 6 eine Seitenansicht einer gegenüber Fig. 4 abgeänderten Ausführungsform mit einem auch als Steinsicherung wirkenden, ansonsten das Erdreich im Bereich der Scharspitze des Zinschars (Dornschars) lockernden/aufschneidenden Teil (Stab und/oder Messer).

Eine erfindungsgemäße Zuckerrüben-Rodevorrichtung für mit 1 bezifferte Zuckerrüben ist als Ganzes mit 2 beziffert und in bevorzugter und vorteilhafter Weise als gesamte Einheit bodenanpassend in der Höhe bewegbar an einem mit 3 bezifferten Querholm, Tragarm od.dgl. einer der Zuckerrüben-Ernte dienenden Maschine angeordnet. Obwohl die Erfindung auch für einreihig rodende "Rübenroder" geeignet ist, wirkt sich ihr Aufbaukonzept bei mehrreihigen Maschinen besonders vorteilhaft aus.

Wie aus Fig. 1, 4 und 6 zu ersehen, weist die Rodevorrichtung 2 einen Halterahmen (teilweise wird solcher auch "Grindel" genannt) 4 auf, welcher am Querholm 3 od.dgl. der Zuckerrüben-Erntemaschine vorzugsweise derart aufgehangen ist, daß auch bei zwei und mehr Rübenreihen für jede Reihe eine gesonderte (unabhängige) Höhenanpassung möglich oder gegeben ist. Besonders vorteilhaft ist das dargestellte Prinzip der Vorrichtungsanordnung über Parallelogramm/Parallelogrammgestänge, weil dadurch eine bodenparallele Höhenverstellung zur Bodenanpassung erzielt wird - es läßt sich jedoch auch eine Schwenkarm-Lösung vorsehen.

Die erfindungsgemäße Zuckerrüben-Rodevorrichtung 2 ist entgegen bisheriger Praxis nicht auf beiden Seiten einer Rübenreihe mit gleichartigen Elementen zum Roden und Zuckerrüben-Fördern ausgebildet, sondern wird auf jeder Vorrichtungsseite (Vorrichtungshälfte) von unterschiedlichen Systemen gebildet. Sie weist auf der einen Seite als Rodeelement 5 eine "Rodescheibe" auf - der ein den seitlichen Zuckerrüben-Verlust verhinderndes und das Zuckerrüben-Hochleiten förderndes Leitrost 6 oder ein Leitrost 6' plus ein Seitenstern 7 zugeordnet ist - und setzt sich auf der anderen Vorrichtungseite (Vorrichtungshälfte) aus einem zinken- oder scharplattenartigen Rodeelement 8 plus einem angetriebenen, unmittelbar im Rodebereich über diesem zinkenartigen Halbschar arbeitenden Fingerrad 9 zusammen. Bei den Ausführungen gemäß Fig. 4 bis 6 besitzt das Leitrost 6 jeweils drei Leitstäbe, die von der Scharhalterung getragen werden - der unterste Leitstab kann dabei als rückwärtige Verlängerung eines zinkenartigen Rodeelementes ausgebildet oder angeordnet sein und bildet mit dem benachbarten (nächsten) Leitstab eine nach hinten ansteigende, vorzugsweise bogenförmige Führung zur Zuckerrüben-Hochförderung mit Abstand zum Bodenniveau.

In bevorzugter und vorteilhafter Weise ist die mit 5 bezifferte, selbst antriebslose Rodescheibe von einer Hohlschutzscheibe gebildet, die rübenseitig konkav gestaltet und sowohl in der Horizontalebene schräggestellt als auch aus der Vertikalen geneigt ist (vgl. Fig. 3 und 5). Sie wirkt im Erdreich pflugartig und wird nur infolge der Maschinen-Vorwärtsbewegung durch den Boden angetrieben. Ihr Durchmesser beträgt ca. 350-450 mm, besonders vorteilhaft ist eine Ausführung mit einem Durchmesser von 420-450 mm. Sie wird von nur einem Halter 10 getragen, der sie außenseitig überfaßt.

Das von der Rodescheibe gebildete Rodeelement 5 schneidet das Erdreich auf und bewegt die gelockerte Erde samt Zuckerrübe 1 in Richtung Rübenmitte M; das mit 8 bezifferte Rodeelement der anderen Seite wirkt dabei einerseits als Widerlager und andererseits auch rüberianhebend - bis zur Erfassung durch das Fingerrad 9, wobei Pos. 6 bzw. 6' oder 7 als Widerlager wirkt. Wie aus Fig. 5 zu ersehen ist, wird jede Zuckerrübe 1 von der Hohlschutzscheibe 5 quer zur Rübenreihe (Reihenflucht) bis gegen das Fingerrad 9 bewegt und erfährt durch das Fingerrad 9 eine zweite, entgegengesetzte Querbewegung in Richtung hintere Hohlschutzscheiben-Hälfte. Die derart hin und her querbewegte, ausgehobene Zuckerrübe 1 wird dann auf einer rinnenbildenden, nach hinten aufsteigenden Leitbahn - die von den Leitstäben 6/6' gebildet wird - hochgefördert, wobei das Fingerrad 9 als Hubelement wirkt.

In besonders bevorzugter Weise wird das Rodeelement 8 von einem Zinkenscharteil (daß heißt von der einen Hälfte eines sogenannten Zinken- oder Dornschares) gebildet. Dieses ist mit seinem hinteren Ende an einem Halter 11 befestigt, welcher vorteilhafterweise auch die Führungsverlängerung, nämlich die Leitrist-Stäbe 6, 6'trägt. Der Halter 11 überfaßt außenseitig die hintere Rodescheiben-Peripherie. Die Pos. 6/6', 8 und 11 bilden eine einzige Montageeinheit.

Das Fingerrad 9 entspricht vom Aufbau her denjenigen gemäß DE 195 04 252 C1 und EP 0 808 095 B1 (des selben Erfinders) und wird mittels eines mit 12 bezifferten und außenseitig liegenden Halters in Position gehalten. Der Antrieb liegt mittig an der Fingerrad-Nabe und ist vorzugsweise von einem Hydraulikmotor (Hydromotor) gebildet. Die Fingerrad-Antriebsmotoren liegen jeweils mit einem Teil ihres Bauraumes im Schatten der schrägstehenden Hohlschutzscheiben. Ein solcher Antrieb ist kleinvolumig und ergibt neben einem leichtgewichtigen Aufbau auch den Vorteil einer freien Sicht durch die Vorrichtungsmittenebene auf die Rübenreihe/Reihenflucht. Außerdem gewährleistet der Fingerrad-Antrieb per Hydromotor eine schmale Vorrichtungsbreite, so daß kleine Aggregatsabstände realisiert werden und vorteilhafterweise Zuckerrüben-Erntemaschinen für 45er Reihenabstand und gesonderter/einzelner Rodeaggregat-Bodenanpassung ausführbar sind. Auch der Rotor "Fingerrad 9" ist in der Horizontalebene in einem nach vorne offenen Winkel schräggestellt sowie in einem nach oben offenen Winkel aus der Vertikalen geneigt (vgl. Fig. 3 und 5). Der Fingerrad-Durchmesser beträgt etwa 550-700 mm - besonders bevorzugt ist ein Durchmesser (Flugkreis) von etwa 620-700 mm.

In bevorzugter Weise ist das im Axialschnitt konkave Fingerrad 9 an einem mit einer Lagernabe versehenen oder verbundenen starren Grundkörper oder Nabenteil 9a mit einem ein- oder mehrteiligen Lagerring 9b aus elastischem Material in Mehrpunkt-Verbindung 9c versehen, in welchem an sich starre Zinken 9d, vorzugsweise Stahlzinken, lagern. Die Zinken 9d lassen sich durch die Zuckerrübe 1 seitwärts drücken und federn durch Rückstellkraft des Lagerringes 9b automatisch zurück. In bevorzugter Weise sind die Zinken 9d im Lagerring 9b auf unterschiedlicher Länge einvulkanisiert bzw. eingeklebt.

Wie aus der Zeichnung des weiteren zu entnehmen ist, liegt die Fingerrad Rotationsachse in Maschinen-Längsrichtung mit Versatz zur Rodescheiben-Rotationsachse. Sie erstreckt sich im Bereich der in Fahrtrichtung F hinteren Rodescheiben-Hälfte oder mit geringem Abstand zu derselben. Das Versatzmaß zwischen den Achsen beträgt in der Draufsicht und somit auch in Maschinen-Längsrichtung etwa 150-300 mm - besonders bevorzugt ist ein "Versatzmaß in der Horizontalen" von etwa 190 mm.

Auch die unteren Peripherien der beiden Rotoren (Pos. 5, 9) sind höhenmäßig versetzt. In bevorzugter Weise liegt diejenige des Fingerrades 9 etwa 40-100 mm höher als diejenige der Hohlschutzscheibe 5. Bei den besonders bevorzugten Ausgestaltungen gemäß Fig. 4-6 ist ein "Achsversatz in der Vertikalen" von etwa 220 mm vorgesehen.

Der Seitenstern 7 gemäß Fig. 2 hat einen Durchmesser von etwa 250-350 mm, vorzugsweise von annähernd 300 mm. Er wird von einem Halter 13 getragen.

Die Halter 10, 11, 12 und 13 sind in der Höhen- und/oder Winkelstellung gegenüber dem Halterahmen (sogen. Grindel) 4 verstellbar.

Die Höhenbeweglichkeit der einzelnen Zuckerrüben-Rodevorrichtungen 2 zwecks automatischer Anpassung an das Bodenprofil beträgt vorzugsweise etwa 100 mm.

Ein die gerodeten Zuckerrüben 1 übernehmendes Reinigungs- und/oder Förderelement ist mit 14 beziffert. Bei mehrreihigen, insbesondere sechsreihigen Zuckerrüben-Rodern haben sich Reinigungswalzen mit Querförder-Eigenschaft - insbesondere Walzen mit niedriger Wendel - besonders bewährt, wie es prinzipiell auch in den Zeichnungen offenbart wird.

Die Rodefurche ist insgesamt mit RF gekennzeichnet. In den Fig. 4 und 6 wird dieselbe (RF) im Höhenschnitt zweistufig dargestellt, nämlich die Eindringtiefe der Hohlschutzscheibe 5 (= obere Schicht) und die Eindringtiefe des eine Vorlockerung und Zuckerrüben-Anhebung betreibenden und mit seiner Spitze längenmäßig der Rodescheiben-Wirkposition (Schnittbereich) in der Draufsicht/Vorrichtungslängsrichtung voreilenden Zinkenschars 8 (= untere Schicht).

Die Strich-Punkt-Punkt-Linie in Fig. 4 und 6 zeigt die Fingerrad-Wirklinie oberhalb des Bodenniveaus.

Gemäß Fig. 6 kann die Zinkenschar-Spitze ein schräg und im wesentlichen aufrecht stehendes Messerschar 15 aufweisen. Dasselbe bewirkt eine weitere Boden-Vorlockerung und kann als sogen. Steinsicherung dienen. Das obere Messerschar-Ende ragt nicht über die Bodenoberfläche hinaus.

## Patentansprüche

1. Zuckerrüben-Rodevorrichtung (2) mit zwei zusammenwirkenden, beidseitig einer Rübenreihe und in einem sich in Fahrtrichtung (F) nach vorn öffnenden Winkel angeordneten, in den Boden eingreifenden Rodeelementen (5, 8) sowie mit den Rodeelementen zugeordneten Leit- und Förderelementen zum Anheben der Zuckerrübe (1) über das Bodenniveau hinaus mittels rotierender Elemente, wobei das Rodeelement der einen Seite von einer das Erdreich pflugartig aufschneidenden und Zuckerrüben (1) anhebenden, bodenangetriebenen Rodescheibe (5) und das Rodeelement der anderen Seite von einem ein seitliches Widerlager für die Zuckerrübe (1) bildenden zinken- oder scharplattenartigen Scharteil (8) gebildet ist, **dadurch gekennzeichnet, dass** die Rodevorrichtung (2) durch die Rodescheibe (5) auf der einen Seite und das Scharteil (8) und ein ihm als Leit- und/oder Förderelement zugeordnetes, unmittelbar im Rodebereich arbeitendes angetriebenes Fingerrad (9) auf der anderen Seite gebildet ist,
dass das Scharteil (8) zur Lockerung des Bodens vor dem Rodevorgang der Rodescheibe (5) ausgebildet ist
und dass die Rodescheibe (5) und das Fingerrad (9) zur wechselweisen Bewegung der Zuckerrübe (1) quer zur Fahrtrichtung (F) in Längsrichtung der Rodevorrichtung (2) gegeneinander versetzt sind.

2. Rodevorrichtung nach Anspruch 1, **dadurch gekennzeichnet, dass** der Rodescheibe (5) ein Leitrost (6, 6') und/oder ein sie außenseitig überlappender Seitenstern (7) zugeordnet ist.

3. Rodevorrichtung nach einem der Ansprüche 1 oder 2, **dadurch gekennzeichnet, dass** das Fingerrad (9) mit elastisch nachgiebig gelagerten starren Zinken (9d) versehen ist.

4. Rodevorrichtung nach einem der Ansprüche 1 bis 3, **dadurch gekennzeichnet, dass** sich die Rotationsachse des Fingerrads (9) im Bereich der in Fahrtrichtung (F) hinteren Rodescheiben-Hälfte oder mit geringem Abstand zu ihr angeordnet ist.

5. Rodevorrichtung nach einem der Ansprüche 1 bis 4, **dadurch gekennzeichnet, dass** das Scharteil (8) an seinem bezogen auf die Fahrtrichtung (F) rückwärtigen Ende einen Halter (11) aufweist, der ein eine Hochförderrinne für die angehobene Zuckerrübe (1) bildendes Leitrost trägt.

6. Rodevorrichtung nach einem der Ansprüche 1 bis 5, **dadurch gekennzeichnet, dass** die untere Peripherie des Fingerrads (9) etwa 40 bis 100 mm höher liegt als diejenige der Rodescheibe (5).

7. Rodevorrichtung nach einem der Ansprüche 1 bis 6, **dadurch gekennzeichnet, dass** die Rodescheibe (5) und das Fingerrad (9) auf der Horizontalen in einem spitzen Winkel zur Fahrtrichtung (F) angeordnet sind, der sich nach vorne öffnet, und in der Höhenrichtung einen sich nach oben öffnenden V-Raum einschließen.

8. Rodevorrichtung nach einem der Ansprüche 1 bis 7, **dadurch gekennzeichnet, dass** der Versatz zwischen den Rotationsachsen der Rodescheibe (5) und des Fingerrads (9) in Fahrtrichtung (F) etwa 150 bis 300 mm beträgt.

9. Mehrreihige Zuckerrüben-Erntemaschine mit mehreren Rodevorrichtungen (2) nach einem der Ansprüche 1 bis 8, die einzeln bodenanpassend höhenbeweglich gelagert sind.

## Claims

1. Sugar beet extracting device (2) comprising two interacting extracting elements (5, 8), which are disposed on both sides of a beet row and at an angle that opens forward in the direction of travel (F) and which bite into the soil, and also comprising guide and conveying elements, assigned to the extracting elements, for lifting the sugar beet (1) beyond the level of the soil by means of rotary elements, the extracting element of the one side being formed by a soil-driven extracting plate (5), which cuts up the earth in a plough-like manner and lifts sugar beets (1), and the extracting element of the other side being formed by a tine-shaped or mouldboard-shaped share part (8) forming a lateral abutment for the sugar beet (1), **characterized in that** the extracting device (2) is formed on the one side by the extracting plate (5) and on the other side by the share part (8) and a driven finger wheel (9) assigned to the latter as a guide and/or conveying element and operating directly in the extracting region,
**in that** the share part (8) is configured to loosen the soil prior to the extracting Operation of the extracting plate (5),
and **in that** the extracting plate (5) and the finger wheel (9), for the alternating motion of the sugar beet (1) transversely to the direction of travel (F), are mutually offset in the longitudinal direction of the extracting device (2).

2. Extracting device according to Claim 1, **characterized in that** to the extracting plate (5) there is assigned a guide grate (6, 6') and/or a side star (7) which overlaps the said extracting plate on the outside.

3. Extracting device according to one of Claims 1 or 2, **characterized in that** the finger wheel (9) is provided with rigid tines (9d) mounted in an elastically resilient manner.

4. Extracting device according to one of Claims 1 to 3, **characterized in that** the rotation axis of the finger wheel (9) is disposed, in the region of the rear half, relative to the direction of travel (F) of the extracting plate, or at a slight distance therefrom.

5. Extracting device according to one of Claims 1 to 4, **characterized in that** the share part (8) has at its rear end, relative to the direction of travel (F), a holder (11), which bears a guide grate forming an elevating chute for the lifted sugar beet.

6. Extracting device according to one of Claims 1 to 5, **characterized in that** the lower periphery of the finger wheel (9) is situated about 40 to 100 mm higher than that of the extracting plate (5).

7. Extracting device according to one of Claims 1 to 6 **characterized in that** the extracting plate (5) and the finger wheel (9) are disposed on the horizontal at an acute, forward-opening angle to the direction of travel (F) and, in the vertical direction, enclose an upward-opening V-space.

8. Extracting device according to one of Claims 1 to 7, **characterized in that** the offset between the rotation axes of the extracting plate (5) and of the finger wheel (9) in the direction of travel (F) measures about 150 to 300 mm.

9. Multi-row sugar beet harvester comprising a plurality of extracting devices (2) according to one of Claims 1 to 8, which are mounted such that they are individually movable in the vertical direction in order to adapt to the soil.

## Revendications

1. Dispositif (2) pour arracher les betteraves sucrières comportant deux éléments d'arrachage (5, 8) venant en prise avec le sol, coopérant ensemble de chaque côté d'une rangée de betteraves, et formant un angle ouvert vers l'avant dans la direction de déplacement (F), ainsi que des éléments de guidage et de transport associés aux éléments d'arrachage pour soulever les betteraves sucrières (1) au-dessus du niveau du sol au moyen d'éléments de rotation, dans lequel l'élément d'arrachage de l'un des côtés comprend un disque d'arrachage (5) entraîné par le sol pour découper la terre à la façon d'une charrue et soulever les betteraves à sucre (1), et l'élément d'arrachage de l'autre côté comprend une partie de soc (8) en forme de dents ou de plaque de soc pour former un aboutement pour les betteraves sucrières (1), **caractérisé en ce que** le dispositif d'arrachage (2) est constitué, sur l'un des côtés, par le disque d'arrachage (5), et sur l'autre côté, par la partie de soc (8) et par une roue à doigts (9) entraînée, associée à cette dernière, en tant qu'élément de guidage et/ou de transport travaillant immédiatement dans la zone d'arrachage.
**en ce que** la partie de soc (8) est conçue pour ameubler le sol avant le processus d'arrachage du disque d'arrachage (5),
et **en ce que** le disque d'arrachage (5) et la roue à doigts (9) sont distants l'un de l'autre transversalement par rapport à la direction de déplacement (F) dans la direction de la longueur du dispositif d'arrachage pour déplacer les betteraves sucrières de façon alternative.

2. Dispositif d'arrachage selon la revendication 1, **caractérisé en ce que** le disque d'arrachage (5) est associé à une grille de guidage (6, 6') et/ou une étoile latérale (7) le recouvrant sur le côté extérieur.

3. Dispositif d'arrachage selon la revendication 1 ou 2, **caractérisé en ce que** la roue à doigts (9) est pourvue de dents rigides (9d) montées de façon à pouvoir s'affaisser élastiquement.

4. Dispositif d'arrachage selon l'une des revendications 1 à 3, **caractérisé en ce que** l'axe de rotation de la roue à doigts (9) est situé dans la zone de la moitié arrière du disque d'arrachage suivant la direction de déplacement (F) ou avec une faible distance de celle-ci.

5. Dispositif d'arrachage selon l'une des revendication 1 à 4, **caractérisé en ce que** la partie de soc (8) présente un support (11) à son extrémité aval, par rapport à la direction de déplacement (F) qui porte une grille de guidage formant une goulotte de transport élevée pour les betteraves sucrières (1) soulevées.

6. Dispositif d'arrachage selon l'une des revendications 1 à 5, **caractérisé en ce que** la périphérie inférieure de la roue à doigts (9) est située environ 40 à 100 mm plus haut que celle du disque d'arrachage (5).

7. Dispositif d'arrachage selon l'une des revendications 1 à 6, **caractérisé en ce que** le disque d'arrachage (5) et la roue à doigts (9) sont disposés dans la direction horizontale, dans un angle aigu par rapport à la direction de déplacement (F) qui s'ouvre vers l'avant, et, dans la direction vers le haut, définissent un espace en V ouvert vers le haut.

8. Dispositif d'arrachage selon l'une des revendications 1 à 7, **caractérisé en ce que** la distance entre les axes de rotation du disque d'arrachage (5) et de la roue à doigts (9) dans la direction de déplacement (F) est d'environ 150 à 300 mm.

9. Machine pour récolter les betteraves sucrières sur plusieurs rangées, comprenant plusieurs dispositifs d'arrachage selon l'une des revendications 1 à 8, qui sont montés individuellement de façon à s'adapter au sol et à être réglables en hauteur.
